# EUROPEAN PATENT APPLICATION

(11) **EP 2 858 373 A1**
(43) Date of publication of application: **08.04.2015**
(21) Application number: 13797596.7
(22) Date of filing: 05.04.2013
(51) Int. Cl.: H04N 21/436, G06F 13/00, H04N 5/00, H04Q 9/00, H04L 12/28, H04N 21/422

(54) **ELECTRONIC APPARATUS, ELECTRONIC APPARATUS SYSTEM, AND ELECTRONIC APPARATUS CONTROL METHOD**

(30) Priority: 28.05.2012 JP 2012121233
(71) Applicant: Funai Electric Co., Ltd., Daito-shi, Osaka 574-0031 (JP)
(72) Inventor: SHIMIZU, Yoshiharu, Daito-shi, Osaka 574-0013 (JP)
(74) Representative: Grünecker Patent- und Rechtsanwälte PartG mbB
(86) International application number: PCT/JP2013/060534
(87) International publication number: WO 2013/179769

(57) **Abstract**

An electronic device (1) includes a function information acquiring portion (12) acquiring function information of another electronic device (2) and a common function recognizing portion (12) recognizing a common function between functions of another electronic device and functions of the electronic device itself (1), and the recognized common function is executed by a selected electronic device.

## Description

### Technical Field

The present invention relates to an electronic device, an electronic device system, and an electronic device control method, and more particularly, it relates to an electronic device including a function information acquiring portion acquiring function information of another electronic device, an electronic device system, and an electronic device control method.

### Background Art

In general, an electronic device including a function information acquiring portion acquiring function information of another electronic device is known. Such an electronic device is disclosed in National Patent Publication Gazette No. 2003-505805, for example.

In National Patent Publication Gazette No. 2003-505805, there is disclosed a home network device acquiring device information from a device connected to a network. This home network device is configured to acquire information for controlling the device from the device (a DVCR (Digital Video Cassette Recorder), a PC (Personal Computer), an STB (Set-Top Box), or the like, for example) connected to the network and display an icon for controlling the device on a display portion of a digital TV set. A user controls (operates) the device by clicking the icon.

### Prior Art

### Patent Document

Patent Document 1: National Patent Publication Gazette No. 2003-505805

### Summary of the Invention

### Problem to be Solved by the Invention

Electronic devices such as a conventional television receiver, conventional various players, and a conventional tuner may have the same function (common function) as each other. For example, both the television receiver and the various players have a function such as a VOD (Video on Demand) function or a DLNA (Digital Living Network Alliance) function (a function of interconnection between devices according to a guideline of the DLNA) as the common function. The user selects an intended electronic device from the electronic devices and causes this electronic device to execute the common function.

In the home network device according to National Patent Publication Gazette No. 2003-505805, however, there is such a disadvantage that it may be difficult for the user to recognize the common function that the electronic devices have when the user does not grasp functions of the electronic devices although the icon for controlling the device (electronic device) connected to the network is displayed.

In other words, there is conceivably such a problem that it is difficult for the user to cause one of the electronic devices to execute the common function that the electronic devices have.

The present invention has been proposed in order to solve the aforementioned problem, and an object of the present invention is to provide an electronic device, an electronic device system, and an electronic device control method each capable of easily causing one of electronic devices to execute a common function that the electronic devices have.

### Means for Solving the Problem

An electronic device according to a first aspect of the present invention includes a function information acquiring portion acquiring function information of another electronic device and a common function recognizing portion recognizing a common function between functions of another electronic device and functions of the electronic device itself on the basis of the function information of another electronic device acquired by the function information acquiring portion, and the common function recognized by the common function recognizing portion is executed by an electronic device selected from the electronic device itself and another electronic device.

As hereinabove described, the electronic device according to the first aspect of the present invention includes the common function recognizing portion recognizing the common function between the functions of another electronic device and the functions of the electronic device itself on the basis of the function information of another electronic device acquired by the function information acquiring portion, whereby the common function recognizing portion recognizes the function common to the electronic devices, and hence a user can easily cause one of the electronic devices to execute the common function that the electronic devices have with an operation system (an operation device or the like common to the electronic devices) common to the electronic devices (all electronic devices including the electronic device itself and at least another electronic device), for example.

The aforementioned electronic device according to the first aspect preferably further includes an execution device selecting portion selecting an electronic device executing the common function recognized by the common function recognizing portion from the electronic device itself and another electronic device. According to this structure, an electronic device suitable for executing the common function can be automatically selected, and hence the user can easily cause the electronic device suitable for executing the common function to execute the common function.

In this case, the execution device selecting portion is preferably configured to select the electronic device executing the common function to minimize the number of unavailable functions in the electronic device itself and another electronic device. According to this structure, a reduction in the number of unavailable functions is suppressed, and hence the electronic device suitable for executing the common function can be properly selected.

In the aforementioned electronic device including the execution device selecting portion, the execution device selecting portion is preferably configured to select the electronic device executing the common function to average a processing load between the electronic device itself and another electronic device. According to this structure, an increase in the load on a specified electronic device can be suppressed, and hence the electronic device suitable for executing the common function can be properly selected.

In the aforementioned electronic device including the execution device selecting portion, the execution device selecting portion is preferably configured to cause another electronic device to execute the common function when the load on the electronic device itself exceeds a prescribed threshold. According to this structure, an increase in the load on the electronic device itself is suppressed, and hence the electronic device suitable for executing the common function can be properly selected.

In the aforementioned electronic device including the execution device selecting portion, the execution device selecting portion is preferably configured to select an electronic device lower in power consumption as the electronic device executing the common function from the electronic device itself and another electronic device. According to this structure, an increase in power consumption is suppressed, and hence the electronic device suitable for executing the common function can be properly selected.

In the aforementioned electronic device including the execution device selecting portion, the execution device selecting portion is preferably configured to select the electronic device executing the common function on the basis of the number of times to execute the common function in each of the electronic device itself and another electronic device. According to this structure, an electronic device executing the common function more frequently can be selected as the electronic device suitable for executing the common function.

The aforementioned electronic device according to the first aspect preferably further includes a command transmitting portion transmitting common function information indicative of the common function recognized by the common function recognizing portion and a command instructing another electronic device to store the common function information to another electronic device. According to this structure, the execution device selecting portion selecting the electronic device executing the common function is provided in another electronic device, similarly to the electronic device itself, whereby the electronic device suitable for executing the common function can be automatically selected in both the electronic device itself and another electronic device.

In the aforementioned electronic device according to the first aspect, the common function recognizing portion is preferably configured to recognize the common function of the functions of another electronic device and the functions of the electronic device itself by comparing codes of the functions of another electronic device with codes of the functions of the electronic device itself. According to this structure, the common function of the functions of another electronic device and the functions of the electronic device itself can be promptly recognized.

In the aforementioned electronic device according to the first aspect, the function information acquiring portion is preferably configured to acquire the function information of another electronic device with a communication interface according to a standard allowing transmission of audio data, video data, and a control signal between the electronic devices. According to this structure, the audio data, the video data, and the control signal can be transmitted through a single cable, and hence the function information of another electronic device can be acquired while the structure of the device is simplified.

In this case, the function information acquiring portion is preferably configured to acquire the function information of another electronic device with a communication interface according to an HDMI standard. According to this structure, the function information of another electronic device can be easily acquired while the structure of the device is simplified.

In the aforementioned electronic device acquiring the function information of another electronic device with the communication interface according to the HDMI standard, the function information acquiring portion is preferably configured to acquire the function information of another electronic device with an HDMI-CEC command. According to this structure, the function information of another electronic device can be easily acquired with the HDMI-CEC command .

In the aforementioned electronic device according to the first aspect, the function information acquiring portion is preferably configured to acquire the function information of another electronic device by a wireless communication system. According to this structure, the function information of another electronic device can be easily acquired without the cable.

The aforementioned electronic device according to the first aspect preferably further includes a remote control device configured to operate the electronic device, and the remote control device preferably includes an execution device selecting portion selecting an electronic device executing the common function recognized by the common function recognizing portion from the electronic device itself and another electronic device. According to this structure, the user can cause one of the electronic devices to execute the common function with the remote control device common to the electronic devices.

An electronic device control method according to a second aspect of the present invention includes steps of acquiring function information of a plurality of electronic devices, recognizing a common function of the plurality of electronic devices on the basis of the function information of the plurality of electronic devices which has been acquired, and selecting an electronic device executing the common function which has been recognized from the plurality of electronic devices.

As hereinabove described, the electronic device control method according to the second aspect of the present invention includes the step of recognizing the common function of the plurality of electronic devices on the basis of the function information of the plurality of electronic devices which has been acquired, whereby a common function recognizing portion recognizes the function common to the electronic devices, and hence a user can easily cause one of the electronic devices to execute the common function that the electronic devices have with an operation system (an operation device or the like common to the electronic devices) common to the electronic devices (all electronic devices including the electronic device itself and at least another electronic device), for example. Furthermore, the electronic device control method includes the step of selecting the electronic device executing the common function which has been recognized from the plurality of electronic devices, whereby an electronic device suitable for executing the common function can be automatically selected, and hence the user can easily cause the electronic device suitable for executing the common function to execute the common function.

An electronic device system according to a third aspect of the present invention includes a first electronic device and a second electronic device, and the first electronic device includes a function information acquiring portion acquiring function information of the second electronic device, a common function recognizing portion recognizing a common function of functions of the second electronic device and functions of the first electronic device on the basis of the function information of the second electronic device acquired by the function information acquiring portion, and an execution device selecting portion selecting an electronic device executing the common function recognized by the common function recognizing portion from the first electronic device and the second electronic device.

In the electronic device system according to the third aspect of the present invention, as hereinabove described, the first electronic device includes the function information acquiring portion acquiring the function information of the second electronic device and the common function recognizing portion recognizing the common function of the functions of the second electronic device and the functions of the first electronic device on the basis of the function information of the second electronic device acquired by the function information acquiring portion, whereby the common function recognizing portion recognizes the function common to the electronic devices, and hence a user can easily cause one of the electronic devices to execute the common function that the electronic devices have with an operation system (an operation device or the like common to the electronic devices) common to the electronic devices (all electronic devices including the electronic device itself and at least another electronic device), for example. Furthermore, the first electronic device includes the execution device selecting portion selecting the electronic device executing the common function recognized by the common function recognizing portion from the first electronic device and the second electronic device, whereby an electronic device suitable for executing the common function can be automatically selected, and hence the user can easily cause the electronic device suitable for executing the common function to execute the common function.

An electronic device system according to a fourth aspect of the present invention includes a first electronic device, a second electronic device, and an operation device, the first electronic device includes a function information acquiring portion acquiring function information of the second electronic device, a common function recognizing portion recognizing a common function of functions of the second electronic device and functions of the first electronic device on the basis of the function information of the second electronic device acquired by the function information acquiring portion, and an information transmitting portion transmitting common function information indicative of the common function recognized by the common function recognizing portion to the operation device, and the operation device includes a receiving portion receiving the common function information transmitted by the information transmitting portion of the first electronic device and an execution device selecting portion selecting an electronic device executing the common function corresponding to the common function information received by the receiving portion from the first electronic device and the second electronic device.

In the electronic device system according to the fourth aspect of the present invention, as hereinabove described, the first electronic device includes the function information acquiring portion acquiring the function information of the second electronic device and the common function recognizing portion recognizing the common function of the functions of the second electronic device and the functions of the first electronic device on the basis of the function information of the second electronic device acquired by the function information acquiring portion, whereby the common function recognizing portion recognizes the function common to the electronic devices, and hence a user can easily cause one of the electronic devices to execute the common function that the electronic devices have with the operation device common to the electronic devices (all electronic devices including the electronic device itself and at least another electronic device). Furthermore, the operation device is configured to include the receiving portion receiving the common function information transmitted by the information transmitting portion of the first electronic device and the execution device selecting portion selecting the electronic device executing the common function corresponding to the common function information received by the receiving portion from the first electronic device and the second electronic device, whereby an electronic device suitable for executing the common function can be automatically selected, and hence the user can easily cause the electronic device suitable for executing the common function to execute the common function.

In the aforementioned electronic device system according to the fourth aspect, the operation device preferably includes a portable terminal. According to this structure, the user can easily cause the electronic device suitable for executing the common function to execute the common function with the portable terminal.

In the aforementioned electronic device system according to the fourth aspect, the execution device selecting portion is preferably configured to select the electronic device executing the common function to minimize the number of unavailable functions in the electronic device itself and another electronic device. According to this structure, a reduction in the number of unavailable functions is suppressed, and hence the electronic device suitable for executing the common function can be properly selected.

In the aforementioned electronic device system according to the fourth aspect, the execution device selecting portion is preferably configured to select the electronic device executing the common function to average a processing load between the electronic device itself and another electronic device. According to this structure, an increase in the load on a specified electronic device can be suppressed, and hence the electronic device suitable for executing the common function can be properly selected.

### Effect of the Invention

According to the present invention, as hereinabove described, one of the electronic devices can be easily caused to execute the common function that the electronic devices have.

### Brief Description of the Drawings

[Fig. 1] A block diagram of an electronic device system according to a first embodiment of the present invention.
[Fig. 2] A flowchart for illustrating the operation of the electronic device system according to the first embodiment of the present invention.
[Fig. 3] A flowchart of optimum device selection processing in Fig. 2.
[Fig. 4] A flowchart of optimum device selection processing according to a modification of the first embodiment of the present invention.
[Fig. 5] A flowchart for illustrating the operation of an electronic device system according to a second embodiment of the present invention.
[Fig. 6] A block diagram of an electronic device system according to a third embodiment of the present invention.
[Fig. 7] A flowchart for illustrating the operation of the electronic device system according to the third embodiment of the present invention.
[Fig. 8] A diagram for illustrating optimum device selection processing according to a modification of the first to third embodiments of the present invention.

### Modes for Carrying Out the Invention

Embodiments of the present invention are hereinafter described on the basis of the drawings.

### (First Embodiment)

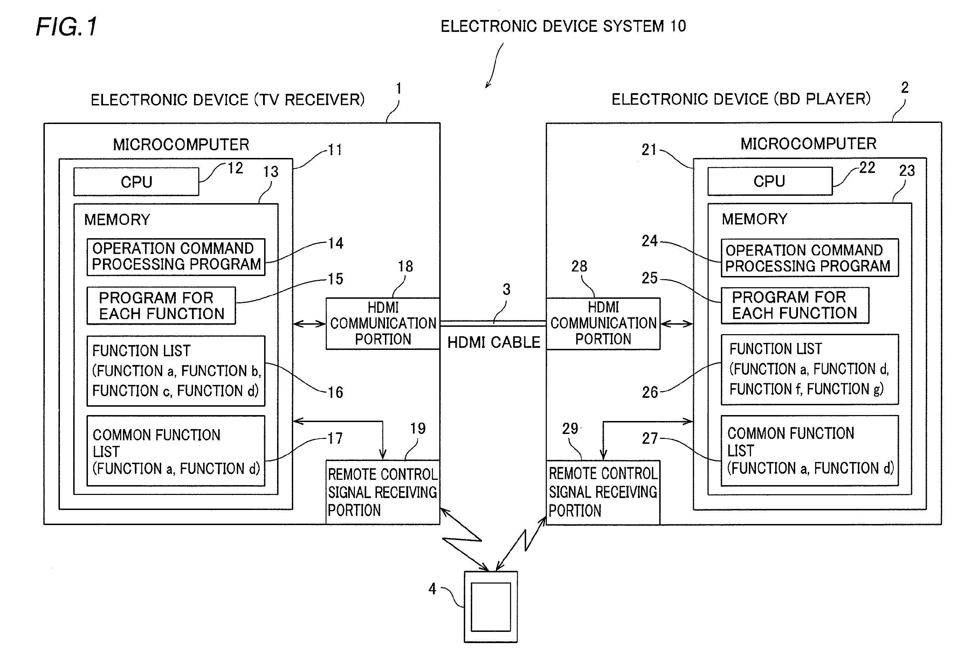

The structure of an electronic device system 10 according to a first embodiment of the present invention is now described with reference to Fig. 1.

The electronic device system 10 according to the first embodiment includes an electronic device 1, an electronic device 2, and an operation device 4 for instructing and operating the electronic device 1 and the electronic device 2, as shown in Fig. 1. The operation device 4 is a smartphone into which an application for a remote control is downloaded. According to the first embodiment, the electronic device 1 is configured to acquire function information of another electronic device 2 with a communication interface according to standards allowing transmission of audio data, video data, and a control signal. Specifically, the electronic device 1 and the electronic device 2 are HDMI-connected to each other by an HDMI (registered trademark) (High Definition Multimedia Interface) cable 3. The electronic device 1 and the electronic device 2 are a television receiver (hereinafter referred to as a TV receiver) and a BD (Blu-ray Disc) (registered trademark) player, for example. In this case, the electronic device system 10 constitutes an AV (Audio and Visual) system. The electronic device 1 is an example of the "first electronic device" in the present invention. The electronic device 2 is an example of the "second electronic device" in the present invention. The operation device 4 is an example of the "remote control device" or the "portable terminal" in the present invention.

The electronic device 1 includes a microcomputer 11. The microcomputer 11 is a circuit in which a CPU 12 totally controlling the electronic device 1, a memory 13 storing various programs, data, etc., and so on are integrated. The memory 13 stores an operation command processing program 14, a program (program for each function) 15, a function list 16, and a common function list 17. The operation command processing program 14 is a program processed when the electronic device 1 receives an operation command for instructions to execute each function from the operation device 4. The program (program for each function) 15 is a program (program for each function) for achieving each function that the electronic device 1 has. The function list 16 is a list storing information about functions that the electronic device 1 has. The common function list 17 is a list storing common function information which is information indicative of common functions of the functions that the electronic device 1 has and functions that the electronic device 2 has.

The electronic device 1 has an HDMI communication portion 18 which is a communication interface according to HDMI standards. The HDMI communication portion 18 receives an HDMI signal (including a video signal and an audio signal) output from the electronic device 2 and serves as an HDMI receiver transmitting and receiving a CEC (Consumer Electronics Control) command (including a response) to and from the electronic device 2. The CPU 12 is an example of the "function information acquiring portion", the "common function recognizing portion", the "execution device selecting portion", the "command transmitting portion", or the "information transmitting portion" in the present invention. The HDMI transmitting portion 18 is an example of the "function information acquiring portion", the "command transmitting portion", or the "information transmitting portion" in the present invention. The electronic device 1 has a remote control signal receiving portion 19 for receiving a remote control signal transmitted from the operation device 4.

The electronic device 2 includes a microcomputer 21. The microcomputer 21 is a circuit in which a CPU 22 totally controlling the electronic device 2, a memory 23 storing various programs, data, etc., and so on are integrated. The memory 23 stores an operation command processing program 24, a program (program for each function) 25, a function list 26, and a common function list 27. The operation command processing program 24 is a program processed when the electronic device 2 receives an operation command for instructions to execute each function from the operation device 4. The program (program for each function) 25 is a program for achieving each function that the electronic device 2 has. The function list 26 is a function list storing information about the functions that the electronic device 2 has. The common function list 27 is a list storing the common function information which is the information indicative of the common functions of the functions that the electronic device 1 has and the functions that the electronic device 2 has.

The electronic device 2 has an HDMI communication portion 28 which is a communication interface according to the HDMI standards. This HDMI communication portion 28 serves as an HDMI transmitter for transmitting a video signal and an audio signal to the electronic device 1 with communication according to the HDMI standards. The electronic device 2 also has a remote control signal receiving portion 29 for receiving a remote control signal transmitted from the operation device 4.

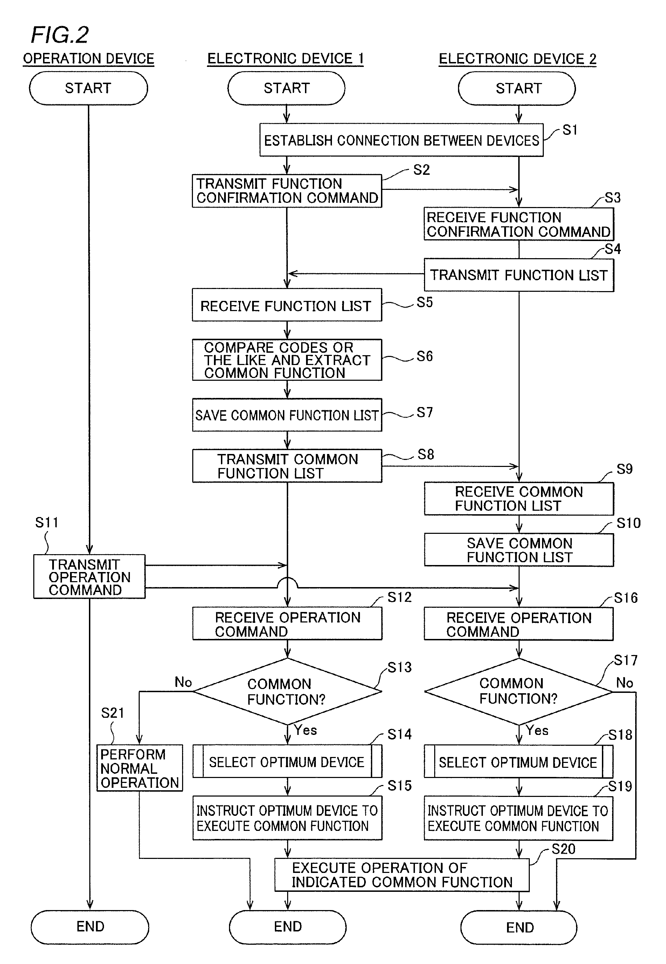

According to the first embodiment, the electronic device 1 is configured to acquire the function information of the electronic device 2 by the CPU 12 through the HDMI communication portion 18 and recognize the common functions of the functions of the electronic device 2 and the functions of the electronic device 1 on the basis of the function information of the electronic device 2 acquired by the CPU 12 and the HDMI communication portion 18. Furthermore, the electronic device 1 is configured to select an electronic device executing the common functions recognized by the CPU 12 from the electronic device 1 and the electronic device 2. The operation of the electronic device system 10 is now described with reference to Figs. 1 and 2.

First, the electronic device 1 and the electronic device 2 are connected to each other by the HDMI cable 3, as shown in Fig. 1. Then, the electronic device 1 and the electronic device 2 are powered (the electronic device 1 and the electronic device 2 are started). Thus, a connection (HDMI connection) between the electronic device 1 and the electronic device 2 through the HDMI communication portion 18 and the HDMI communication portion 28 is established by the CPU 12 of the electronic device 1 and the CPU 22 of the electronic device 2 at a step S1, as shown in Fig. 2. Then, according to the first embodiment, the CPU 12 of the electronic device 1 transmits a function confirmation command which is a type of CEC vendor command (a command independently prepared by each manufacturer employing CEC) to the electronic device 2 through the HDMI communication portion 18 at a step S2. Then, the CPU 22 of the electronic device 2 receives the function confirmation command transmitted from the electronic device 1 through the HDMI communication portion 28 at a step S3. Thereafter, the content of the function list 26 which is a function list that the electronic device 2 itself has is read from the memory 23, and data of the function list is transmitted to the electronic device 1 through the HDMI communication portion 28 at a step S4.

Then, according to the first embodiment, the CPU 12 of the electronic device 1 receives (acquires) the aforementioned data of the function list through the HDMI communication portion 18 at a step S5. Then, the data of the function list of the electronic device 2 is compared with data of the function list 16 of the electronic device 1 stored in the memory 13 of the electronic device 1, and the common functions of the functions that the electronic device 1 has and the functions that the electronic device 2 has are extracted (recognized) at a step S6. Specifically, when the functions that the electronic device 1 has are a function a, a function b, a function c, and a function d and the functions that the electronic device 2 has are a function a, a function d, a function f, and a function g, as shown in the function list 16 and the function list 26 in Fig. 1, for example, the common functions extracted at the step S6 are the function a and the function d. Although the functions that the electronic devices 1 and 2 have are described as the function a, the function b, and so on in the function list 16 and the function list 26 in Fig. 1 for ease of explanation, the data actually stored in the function list 16 and the function list 26 is codes representing functions, for example, in order to save memory capacity. In other words, according to the first embodiment, the CPU 12 of the electronic device 1 compares the codes of the functions of the electronic device 2 with the codes of the functions of the electronic device 1 stored in the memory 13 to extract the common functions of the functions of the electronic device 1 and the functions of the electronic device 2.

After completing common function extraction processing at the step S6, the CPU 12 of the electronic device 1 saves (stores) data (codes of the common functions, for example) representing the extracted common functions as the common function list 17 in the memory 13 at a step S7. The data representing the common functions is an example of the "common function information" in the present invention. When the common functions extracted at the step S6 are the function a and the function d, as described above, data representing the function a and the function d is stored in the common function list 17, as shown in Fig. 1. Then, according to the first embodiment, the CPU 12 of the electronic device 1 transmits the data of the common function list 17 stored in the memory 13 at the step S7 together with a command (CEC vendor command) instructing the electronic device 2 to store this data to the electronic device 2 through the HDMI communication portion 18 at a step S8.

Then, the CPU 22 of the electronic device 2 receives the data of the common function list transmitted from the electronic device 1 through the HDMI communication portion 28 at a step S9 and saves (stores) this data as the common function list 27 in the memory 23 at a step S10.

After completion of the aforementioned processing at the steps S1 to S10, a user performs an operation for instructions to execute each function that the electronic device 1 has from an operation screen for the electronic device 1 with the operation device 4. Thus, the operation device 4 transmits the operation command to the electronic device 1 at a step S11. Then, the CPU 12 of the electronic device 1 receives the operation command transmitted from the operation device 4 at a step S12. Thereafter, the CPU 12 of the electronic device 1 determines whether or not the operation command received at the step S12 is an operation command for instructions to execute a common function common to the functions of the electronic device 1 and the functions of the electronic device 2 on the basis of the data of the common function list 17 stored in the memory 13 at a step S13.

Then, when determining that the operation command received at the step S12 is the operation command for instructions to execute the common function at the step S13, the CPU 12 of the electronic device 1 selects an electronic device suitable for executing the common function indicated by the aforementioned operation command from the electronic device 1 and the electronic device 2 at a step S14. In other words, the CPU 12 of the electronic device 1 selects an electronic device optimum for executing the common function indicated by the aforementioned operation command from the electronic device 1 and the electronic device 2. In Fig. 1, the HDMI-connected electronic devices are two of the electronic device 1 and the electronic device 2, and hence the electronic device suitable for executing the common function indicated by the aforementioned operation command is selected from these electronic devices. In the case where three or more electronic devices are HDMI-connected to each other, the electronic device optimum for executing the common function indicated by the operation command is selected from the three or more electronic devices.

Then, at a step S15, the CPU 12 of the electronic device 1 instructs the electronic device (optimum electronic device) selected at the step S14 to execute the common function indicated by the operation command transmitted at the step S11. When the selected electronic device is the electronic device 2, a command for instructions to execute the common function indicated by the operation command at the step S11 is transmitted to the electronic device 2. Thus, at a step S20, the electronic device (optimum electronic device) selected at the step S14 executes the operation of the common function indicated by the operation command at the step S11. In other words, the CPU 12 of the electronic device 1 controls the electronic device selected at the step S14 to execute the common function indicated by the operation command at the step S11. According to the first embodiment, when the operation command received at the step S12 is not the operation command for instructions to execute the common function, the CPU 12 of the electronic device 1 controls the electronic device 1 to perform a normal operation (controls the electronic device 1 to perform an operation according to the operation command) at a step S21. When the operation command received at the step S12 is an operation command for instructions to execute the function b stored in the function list 16 in Fig. 1, for example, the CPU 12 of the electronic device 1 executes the function b that the electronic device 1 has.

When the operation device 4 transmits the operation command according to an instruction operation performed through the operation screen for the electronic device 1 of the operation device 4 by the user at the aforementioned step S11 and the electronic device 2 receives the operation command at a step S16, on the other hand, the CPU 22 of the electronic device 2 determines whether or not the operation command received at the step S16 is the operation command for instructions to execute the common function common to the functions of the electronic device 1 and the functions of the electronic device 2 on the basis of the data of the common function list 27 stored in the memory 23 at a step S17.

When the operation command received at the step S16 is the operation command for instructions to execute the common function, the CPU 22 of the electronic device 2 selects the electronic device suitable for executing the common function indicated by the aforementioned operation command from the electronic device 1 and the electronic device 2 (selects the electronic device optimum for executing the common function indicated by the aforementioned operation command from the electronic device 1 and the electronic device 2) at a step S18.

Then, at a step S19, the CPU 22 of the electronic device 2 instructs the electronic device selected (as the optimum electronic device) at the step S18 to execute the common function indicated by the operation command transmitted at the step S11 (when the selected electronic device is the electronic device 1, the command for instructions to execute the common function indicated by the operation command at the step S11 is transmitted to the electronic device 1). Thus, at the step S20, the electronic device selected as the optimum electronic device at the step S18 executes the operation of the common function indicated by the operation command at the step S11. In other words, the CPU 22 of the electronic device 2 controls the electronic device selected at the step S18 to execute the common function indicated by the operation command at the step S11. When the operation command received at the step S16 is not the operation command for instructions to execute the common function, the CPU 22 of the electronic device 2 performs nothing.

When both the electronic device 1 and the electronic device 2 receive the operation command for instructions to execute the common function from the operation device 4, the electronic device selected (as the optimum electronic device) on the basis of an earlier instruction of the instruction from the electronic device 1 and the instruction from the electronic device 2 executes the operation of the common function indicated by the operation command at the step S11.

A specific example of optimum electronic device selection processing shown at the aforementioned step S14 and step S18 is now described.

It is assumed that the electronic device 1 and the electronic device 2 shown in Fig. 1 are a TV receiver and a BD player, respectively, and the function a and the function b are a VOD (Video on Demand) playback function and a noise reduction function, respectively, for example. Furthermore, it is assumed that the operation command transmitted from the operation device 4 is an operation command for instructions to execute the function a (VOD playback function), and one of or both of the TV receiver and the BD player receive this operation command. In this case, the VOD playback function largely uses a resource of the CPU of the electronic device executing the VOD playback function, and hence in the electronic device executing the VOD playback function, functions other than the VOD playback function cannot be used. Therefore, when the VOD playback function is executed in the TV receiver, functions (the function b and the function c in Fig. 1) that the TV receiver only has, other than the VOD playback function cannot be used. Assuming that the function b and the function c are general functions of the TV receiver, such as a screen brightness adjustment function and a sharpness adjustment function (a function of changing the level of a high frequency region for an image frequency), the performance of the entire system can be improved by causing the BD player not the TV receiver to execute the VOD playback function. Therefore, when the TV receiver or the BD player receives the operation command for instructions to execute the VOD playback function, the BD player not the TV receiver is caused to execute the VOD playback function.

Generally, in the aforementioned case, the user selects an electronic device executing a VOD playback function with an operation device, and hence the user cannot determine which one of a TV receiver and a BD player is preferred to execute the VOD playback function from the point of view of the performance of an entire electronic device system unless the user totally knows the performance of the entire system. In the electronic device system 10 according to the first embodiment, however, in the aforementioned case, the electronic device (BD player) optimum from the point of view of the performance of the entire system can be caused to execute the indicated common function (VOD playback function).

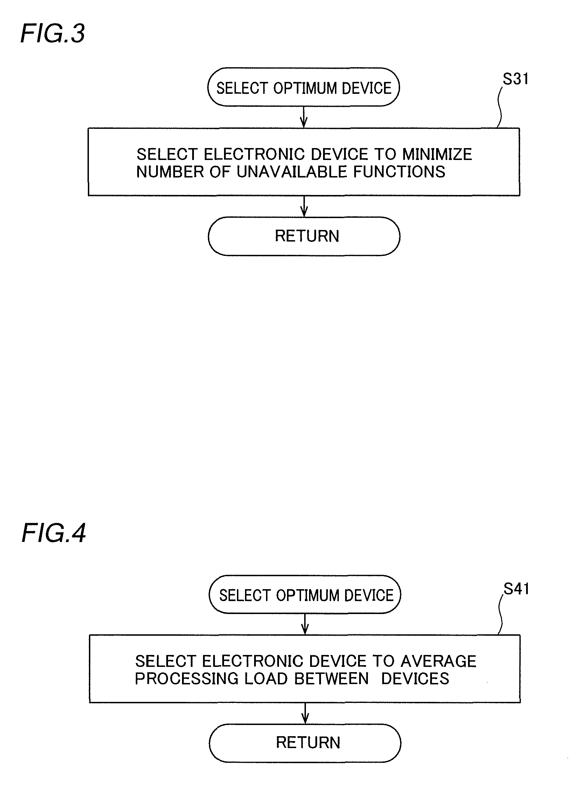

In other words, according to the first embodiment, when the operation command received from the operation device 4 is the operation command for instructions to execute the common function, at a step S31, the CPU 12 of the electronic device 1 or the CPU 22 of the electronic device 2 selects the electronic device optimum for executing the indicated common function to minimize the number of unavailable functions in the electronic device 1 and the electronic device 2 in the optimum electronic device selection processing shown at the aforementioned step S14 and step S18, as shown in Fig. 3.

Furthermore, in the case where the user uses the noise reduction function with the operation device 4 when the TV receiver receives/displays a video/audio signal from the BD player, the noise reduction function of the TV receiver is generally used. If the noise reduction function is used near a signal source, however, the noise reduction effect may be improved. Thus, in this case, the CPU 12 of the electronic device 1 or the CPU 22 of the electronic device 2 gives instructions to use the noise reduction function of the BD player (controls the BD player to execute the noise reduction function) in the optimum electronic device selection processing at the aforementioned step S14 and step S18 in the electronic device system 10 according to the first embodiment.

According to the first embodiment, as hereinabove described, the CPU 12 recognizing the common functions between the functions of the electronic device 2 and the functions of the electronic device 1 on the basis of the function information of the electronic device 2 acquired by the CPU 12 and the HDMI communication portion 18 is provided, whereby the CPU 12 recognizes the functions common to the electronic devices, and hence the user can easily cause the electronic device 1 or 2 to execute the common functions that the electronic devices have with an operation system (operation device 4) common to the electronic devices (the electronic device 1 and at least the electronic device 2). Specifically, the user can instruct the electronic device 1 or 2 to execute the common function from the common operation screen (the operation screen for the electronic device 1) with the operation device 4 common to the electronic devices 1 and 2.

According to the first embodiment, as hereinabove described, the CPU 12 (CPU 22) selecting the electronic device executing the recognized common function from the electronic device 1 and the electronic device 2 is provided. Thus, the electronic device suitable for executing the common function can be automatically selected, and hence the user can easily cause the electronic device suitable for executing the common function to execute the common function.

According to the first embodiment, as hereinabove described, the CPU 12 (CPU 22) is configured to select the electronic device executing the common function to minimize the number of unavailable functions in the electronic device 1 and the electronic device 2. Thus, a reduction in the number of unavailable functions is suppressed, and hence the electronic device suitable for executing the common function can be properly selected.

According to the first embodiment, as hereinabove described, the CPU 12 is configured to transmit the data of the common function list 17 together with the command instructing the electronic device 2 to store this data to the electronic device 2 through the HDMI communication portion 18. Thus, the data of the common function list can be stored in the electronic device 2, and hence the electronic device suitable for executing the common function can be automatically selected in both the electronic device 1 and the electronic device 2.

According to the first embodiment, as hereinabove described, the CPU 12 is configured to recognize the common functions of the functions of the electronic device 2 and the functions of the electronic device 1 by comparing the codes of the functions of the electronic device 2 with the codes of the functions of the electronic device 1. Thus, the common functions of the functions of the electronic device 2 and the functions of the electronic device 1 can be promptly recognized.

According to the first embodiment, as hereinabove described, the CPU 12 and the HDMI communication portion 18 are configured to acquire the function information of the electronic device 2 with the communication interface according to the HDMI standards. Thus, the audio data, the video data, and the control signal can be transmitted through the single HDMI cable 3, and hence the electronic device 1 can easily acquire the function information of the electronic device 2 while the structure of the device is simplified.

According to the first embodiment, as hereinabove described, the CPU 12 and the HDMI communication portion 18 are configured to acquire the function information of the electronic device 2 with the HDMI-CEC command. Thus, the electronic device 1 can easily acquire the function information of another electronic device with the HDMI-CEC command.

### (Modification of First Embodiment)

A flow of optimum device selection according to a modification of the first embodiment is now described with reference to Fig. 4. In the optimum electronic device selection processing shown at the step S14 and the step S18 in Fig. 2, the CPU 12 of the electronic device 1 (the CPU 22 of the electronic device 2) may select the electronic device optimum for executing the indicated common function to average a processing load between the electronic devices at a step S41, as shown in Fig. 4. Thus, an increase in the load on a specified electronic device can be suppressed, and hence the electronic device suitable for executing the common function can be properly selected.

### (Second Embodiment)

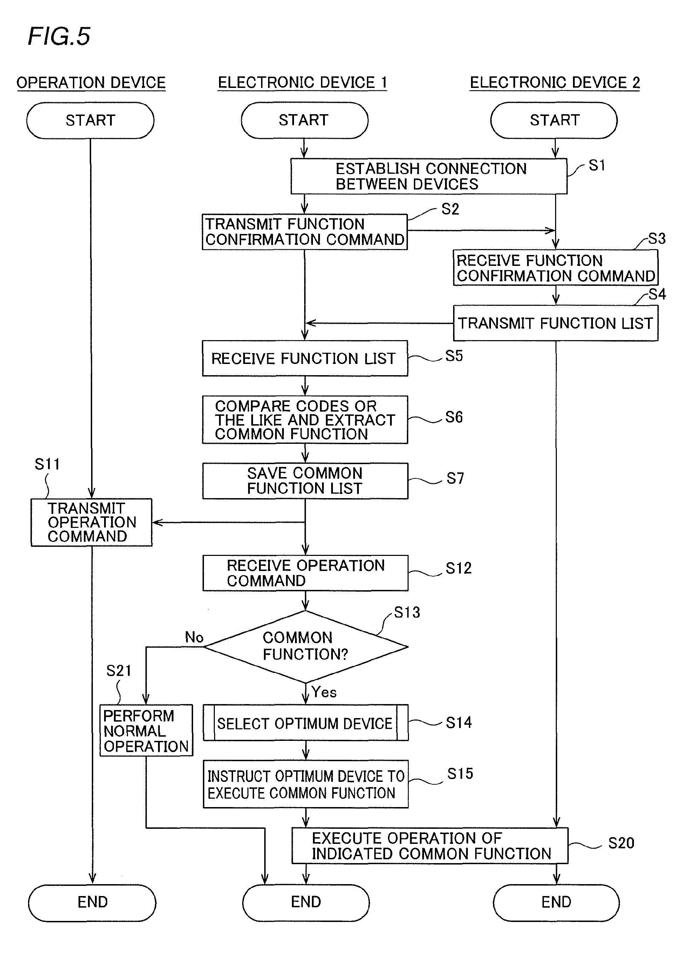

An electronic device system 10 and an electronic device 1 according to a second embodiment of the present invention are now described with reference to Fig. 5. In the electronic device system 10 according to the second embodiment, no common function list 27 is stored in a memory 23 of an electronic device 2, unlike the aforementioned first embodiment. The remaining structure of the second embodiment is similar to that of the aforementioned first embodiment, and hence the description is omitted. In a flowchart of Fig. 5, processing similar to the processing in the electronic device system 10 according to the first embodiment shown in the flowchart of Fig. 2 is denoted by the same numerals, and the description is omitted.

According to the second embodiment, in the electronic device 2 shown in Fig. 1, no common function list 27 is stored. Furthermore, one (the electronic device 2 in the second embodiment) of the electronic device 1 and the electronic device 2 has no function of selecting an electronic device suitable for executing a common function indicated by an operation command from an operation device 4. Specifically, according to the second embodiment, the electronic device 1 does not transmit data of a common function list 17 to the electronic device 2 (the processing at the step S8 in Fig. 2 is not performed), as shown in Fig. 5, unlike the first embodiment. In addition, the processing at the step S9, the step S10, and the steps S16 to S19 in Fig. 2 is not performed in the electronic device 2. In other words, according to the second embodiment, only the electronic device 1 selects an electronic device executing the common function from the electronic device 1 and the electronic device 2. Thus, the electronic device 2 is configured not to store the common function list 27 in the memory 23, whereby the memory capacity of the memory 23 of the electronic device 2 can be saved.

The effects of the second embodiment are similar to those of the aforementioned first embodiment.

### (Third Embodiment)

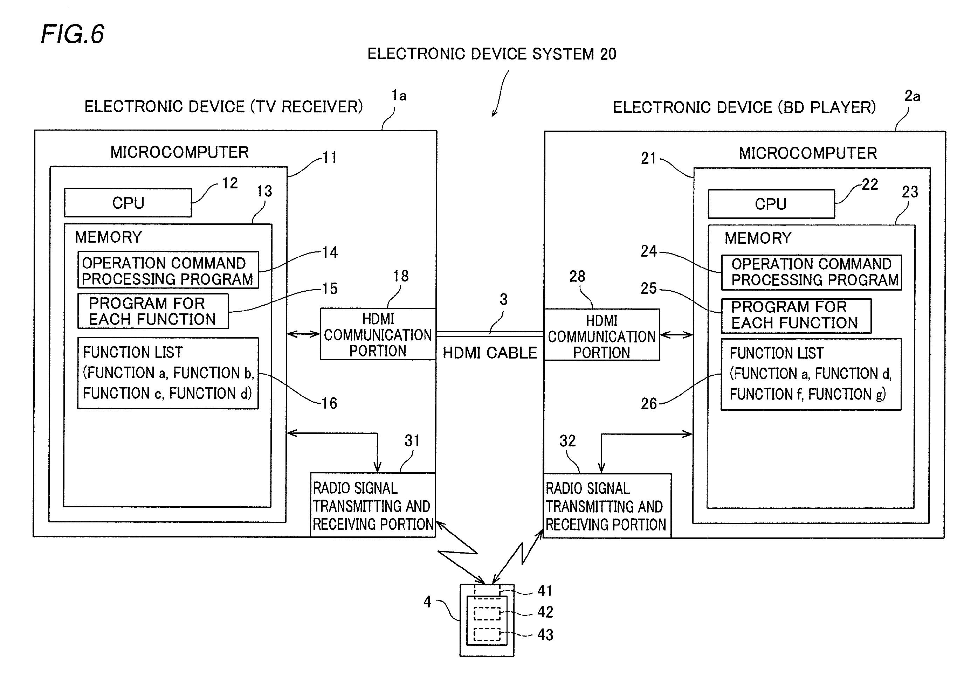

An electronic device system 20 and an electronic device 1 according to a third embodiment of the present invention are now described with reference to Fig. 6.

As shown in Fig. 6, in the electronic device system 20 according to the third embodiment, a memory 13 of the electronic device 1a or a memory 23 of an electronic device 2a stores no common function list, but an operation device 4 has a memory 43 for saving a common function list so that the common function list is stored in the operation device 4, unlike the structure of the first embodiment shown in Fig. 1. According to the third embodiment, the operation device 4 is a portable terminal (smartphone). The electronic device 1a and the electronic device 2a according to the third embodiment include radio signal receiving portions 31 and 32 not the remote control signal receiving portions unlike the electronic device 1 and the electronic device 2 according to the first embodiment, respectively. Furthermore, the operation device 4 according to the third embodiment includes a radio signal transmitting and receiving portion 41. The radio signal transmitting and receiving portion 41 is an example of the "receiving portion". A CPU 42 is an example of the "execution device selecting portion" or the "receiving portion". The remaining structure of the electronic device system 20 according to the third embodiment is similar to the structure of the electronic device system 10 according to the aforementioned first embodiment, and hence the description is omitted.

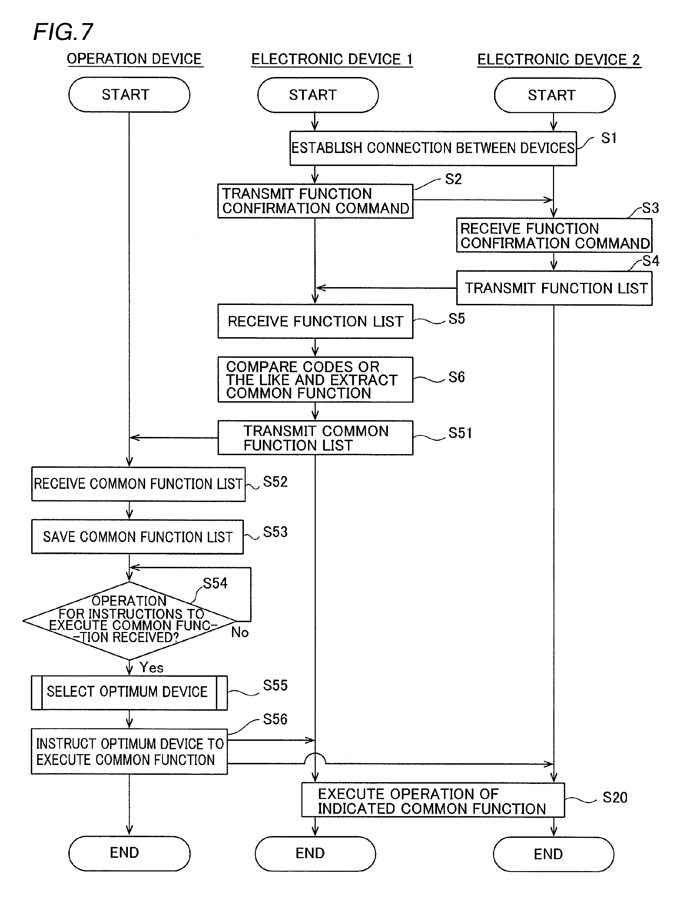

The operation of the electronic device system 20 is now described with reference to Fig. 7.

In the electronic device system 20 according to the third embodiment, processing similar to the processing at the steps S1 to S6 shown in the flowchart of Fig. 2 is performed, as shown in Fig. 7. Thereafter, a CPU 12 of the electronic device 1a transmits data (data of a common function list 17) representing common functions extracted at the step S6 and a command instructing the operation device 4 to store this data to the operation device 4 at a step S51.

Then, the CPU 42 (see Fig. 6) of the operation device 4 receives the data of the common function list transmitted from the electronic device 1a through the radio signal transmitting and receiving portion 41 at a step S52 and saves (stores) this data as the common function list in the memory 43 at a step S53.

After completion of the processing at the step S53, a user performs an operation for instructions to execute a common function of functions of the electronic device 1a and functions of the electronic device 2a from a common operation screen with the operation device 4 at a step S54, and thereafter the CPU 42 of the operation device 4 selects an electronic device suitable for executing the common function indicated by the aforementioned operation from the electronic device 1a and the electronic device 2a (selects an electronic device optimum for executing the common function indicated by the aforementioned operation from the electronic device 1a and the electronic device 2a) at a step S55.

Then, at a step S56, the CPU 42 of the operation device 4 transmits a command for instructions to execute the common function indicated at the step S54 to the electronic device selected (as the optimum electronic device) at the step S55. Thus, at a step S20, the electronic device selected as the optimum electronic device at the step S55 executes the operation of the common function indicated at the step S54. In other words, the CPU 42 of the operation device 4 controls the electronic device selected at the step S55 to execute the common function indicated at the step S54.

According to the third embodiment, as hereinabove described, the operation device 4 is configured to include the radio signal receiving portion 41 and the CPU 42 receiving the common function list transmitted by an HDMI communication portion 18 of the electronic device 1a and the CPU 42 selecting the electronic device executing the common function corresponding to the received common function list from the electronic device 1a and the electronic device 2a, whereby the electronic device suitable for executing the common function can be automatically selected, and hence the user can easily cause the electronic device suitable for executing the common function to execute the common function with an operation system (operation device 4) common to the electronic device 1a and the electronic device 2a. Specifically, the user can use this operation device 4 as an operation device common to the electronic devices 1a and 2a to instruct the electronic device 1a or 2a to execute the common function from the common operation screen (an operation screen for the common function).

According to the third embodiment, as hereinabove described, the operation device 4 is the portable terminal (smartphone). Thus, the user can easily cause the electronic device suitable for executing the common function to execute the common function with the portable terminal.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

For example, while the case where there are the two electronic devices in the electronic device system has been shown as an example in each of the aforementioned first to third embodiments, the present invention is not restricted to this. There may be three or more electronic devices in the electronic device system, for example. In the case where there are the three or more electronic devices, functions common to all the electronic devices may be stored in common function lists, or different common function lists may be prepared for respective combinations of the electronic devices.

While the case where the two electronic devices are HDMI-connected to each other has been shown as an example in each of the aforementioned first to third embodiments, the present invention is not restricted to this. The two electronic devices may be connected to each other by a wireless communication system, for example. In this case, the function information of the electronic device can be easily acquired without the cable.

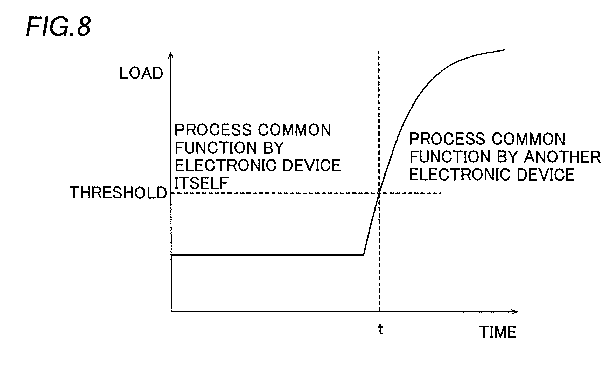

While the example of selecting the electronic device executing the common function to minimize the number of unavailable functions (average the processing load between the electronic devices) in the optimum electronic device selection processing has been shown in each of the aforementioned first to third embodiments, the present invention is not restricted to this. For example, the electronic device may be configured to cause another electronic device to execute the common function when the load on itself exceeds a prescribed threshold (time t), as shown in Fig. 8. In this case, an increase in the load on itself is suppressed, and hence the electronic device suitable for executing the common function can be properly selected. Alternatively, in the optimum electronic device selection processing, an electronic device whose power consumption is the lowest may be selected as the device executing the common function from the electronic devices. In this case, an increase in power consumption is suppressed, and hence the electronic device suitable for executing the common function can be properly selected.

Alternatively, in the optimum electronic device selection processing, the device executing the common function may be selected with the numbers of times (usage histories) the electronic device itself and another electronic device perform the common function. For example, an electronic device executing the indicated common function more frequently may be selected as the device executing the common function from the electronic devices. In this case, the electronic device executing the common function more frequently can be selected as the electronic device suitable for executing the common function.

While the example of connecting the electronic devices to each other according to the HDMI standards has been shown in each of the aforementioned first to third embodiments, the present invention is not restricted to this. According to the present invention, interface standards other than the HDMI standards may be employed so far as the same are interface standards allowing the electronic devices connected to each other by a prescribed cable capable of transmitting the audio data, the video data, and the control signal to perform a coordinated operation with the control signal.

### Reference Numerals

1, 1a: electronic device (first electronic device)
2, 2a: electronic device (second electronic device)
4: operation device (remote control device, portable terminal)
10, 20: electronic device system
12: CPU (function information acquiring portion, common function recognizing portion, execution device selecting portion, command transmitting portion, information transmitting portion)
18: HDMI communication portion (function information acquiring portion, command transmitting portion, information transmitting portion)
22: CPU (execution device selecting portion)
41: radio signal transmitting and receiving portion (receiving portion)
42: CPU (execution device selecting portion, receiving portion)

## Claims

1. An electronic device comprising:
a function information acquiring portion (12) acquiring function information of another electronic device (2); and
a common function recognizing portion (12) recognizing a common function between functions of the another electronic device and functions of the electronic device itself (1) on the basis of the function information of the another electronic device acquired by the function information acquiring portion, wherein
the common function recognized by the common function recognizing portion is executed by an electronic device selected from the electronic device itself and the another electronic device.

2. The electronic device according to claim 1, further comprising an execution device selecting portion (12, 22, 42) selecting an electronic device executing the common function recognized by the common function recognizing portion from the electronic device itself and the another electronic device.

3. The electronic device according to claim 2,
wherein
the execution device selecting portion is configured to select the electronic device executing the common function to minimize a number of unavailable functions in the electronic device itself and the another electronic device.

4. The electronic device according to claim 2,
wherein
the execution device selecting portion is configured to select the electronic device executing the common function to average a processing load between the electronic device itself and the another electronic device.

5. The electronic device according to claim 2,
wherein
the execution device selecting portion is configured to cause the another electronic device to execute the common function when a load on the electronic device itself exceeds a prescribed threshold.

6. The electronic device according to claim 2,
wherein
the execution device selecting portion is configured to select an electronic device lower in power consumption as the electronic device executing the common function from the electronic device itself and the another electronic device.

7. The electronic device according to claim 2,
wherein
the execution device selecting portion is configured to select the electronic device executing the common function on the basis of a number of times to execute the common function in each of the electronic device itself and the another electronic device.

8. The electronic device according to claim 1, further comprising a command transmitting portion (12, 18) transmitting common function information indicative of the common function recognized by the common function recognizing portion and a command instructing the another electronic device to store the common function information to the another electronic device.

9. The electronic device according to claim 1,
wherein
the common function recognizing portion is configured to recognize the common function of the functions of the another electronic device and the functions of the electronic device itself by comparing codes of the functions of the another electronic device with codes of the functions of the electronic device itself.

10. The electronic device according to claim 1,
wherein
the function information acquiring portion is configured to acquire the function information of the another electronic device with a communication interface according to a standard allowing transmission of audio data, video data, and a control signal between the electronic devices.

11. The electronic device according to claim 10,
wherein
the function information acquiring portion is configured to acquire the function information of the another electronic device with a communication interface according to an HDMI standard.

12. The electronic device according to claim 11,
wherein
the function information acquiring portion is configured to acquire the function information of the another electronic device with an HDMI-CEC command.

13. The electronic device according to claim 1,
wherein
the function information acquiring portion is configured to acquire the function information of the another electronic device by a wireless communication system.

14. The electronic device according to claim 1, further comprising a remote control device (4) configured to operate the electronic device,
the remote control device including an execution device selecting portion (41) selecting an electronic device executing the common function recognized by the common function recognizing portion from the electronic device itself and the another electronic device.

15. An electronic device control method comprising steps of:
acquiring function information of a plurality of electronic devices;
recognizing a common function of the plurality of electronic devices on the basis of the function information of the plurality of electronic devices which has been acquired; and
selecting an electronic device executing the common function which has been recognized from the plurality of electronic devices.

16. An electronic device system comprising:
a first electronic device (1); and
a second electronic device (2),
the first electronic device including:
a function information acquiring portion (12) acquiring function information of the second electronic device,
a common function recognizing portion (12) recognizing a common function of functions of the second electronic device and functions of the first electronic device on the basis of the function information of the second electronic device acquired by the function information acquiring portion, and
an execution device selecting portion (12, 22) selecting an electronic device executing the common function recognized by the common function recognizing portion from the first electronic device and the second electronic device.

17. An electronic device system comprising:
a first electronic device (1);
a second electronic device (2); and
an operation device (4),
the first electronic device including:
a function information acquiring portion (12) acquiring function information of the second electronic device,
a common function recognizing portion (12) recognizing a common function of functions of the second electronic device and functions of the first electronic device on the basis of the function information of the second electronic device acquired by the function information acquiring portion, and
an information transmitting portion (12, 18) transmitting common function information indicative of the common function recognized by the common function recognizing portion to the operation device, and
the operation device including:
a receiving portion (41, 42) receiving the common function information transmitted by the information transmitting portion of the first electronic device, and
an execution device selecting portion (42) selecting an electronic device executing the common function corresponding to the common function information received by the receiving portion from the first electronic device and the second electronic device.

18. The electronic device system according to claim 17, wherein
the operation device comprises a portable terminal.

19. The electronic device system according to claim 17, wherein
the execution device selecting portion is configured to select the electronic device executing the common function to minimize a number of unavailable functions in the electronic device itself and the another electronic device.

20. The electronic device system according to claim 17, wherein
the execution device selecting portion is configured to select the electronic device executing the common function to average a processing load between the electronic device itself and the another electronic device.
